# EUROPEAN PATENT APPLICATION

(11) **EP 4 672 076 A1**
(43) Date of publication of application: **31.12.2025**
(21) Application number: 25184858.6
(22) Date of filing: 24.06.2025
(51) Int. Cl.: G06F 30/367, G06F 115/02

(54) **GROUP-BASED SIMULATIONS OF HYBRID BUMPS OF CIRCUIT DESIGNS FOR 3-DIMENSIONAL INTEGRATED CIRCUITS**

(30) Priority: 26.06.2024 US 202418754555
(71) Applicant: Siemens Industry Software Inc., Plano, TX 75024 (US)
(72) Inventor: ABD ELKADER, Shohdy, 11936 Cairo (EG); ABDELRAHMAN, Mai, 11936 Cairo (EG); NASSER, Ahmed, 11936 Nasr City, Cairo (EG)
(74) Representative: HKW Intellectual Property PartG mbB

(57) **Abstract**

Systems and methods are presented for group-based simulations of hybrid bumps of circuit designs for 3-dimensional integrated circuits (3DICs). A method may include identifying hybrid bumps for an input circuit design, and each hybrid pump may represent a connection element between circuits of a 3-dimensional integrated circuit (3DIC) structure. The method may also include grouping the hybrid bumps into bump groups based on a pitch value that specifies a distance between the hybrid bumps from one another, wherein each bump group comprises multiple hybrid bumps. For a given bump group of the bump groups, the method may include performing a point-to-point simulation from a representative point determined for the given bump group and using a result of the point-to-point simulation from the representative point as a simulation result for each of the multiple hybrid bumps included in the given bump group.

## Description

### BACKGROUND

Electronic circuits, such as integrated circuits, are used in nearly every facet of modern society, from automobiles to microwaves to personal computers. Design of circuits may involve many steps, known as a "design flow." The particular steps of a design flow are often dependent upon the type of circuit being designed, its complexity, the design team, and the circuit fabricator or foundry that will manufacture the circuit. Electronic design automation (EDA) applications support the design and verification of circuits prior to fabrication. EDA applications may implement various EDA procedures, e.g., functions, tools, or features to analyze, test, or verify a circuit design at various stages of the design flow.

### BRIEF DESCRIPTION OF THE DRAWINGS

Certain examples are described in the following detailed description and in reference to the drawings.
Figure 1 shows an example of a computing system that supports group-based simulations of hybrid bumps of circuit designs for 3-dimensional integrated circuits (3DICs).
Figure 2 shows an example identification of hybrid bumps for an input circuit design according to the present disclosure.
Figure 3 shows an example of hybrid bump grouping for a bump array with a regular topology according to the present disclosure.
Figure 4 shows an example of hybrid bump grouping for a bump array with an irregular topology according to the present disclosure.
Figure 5 shows an example of logic that a system may implement to support group-based simulations of hybrid bumps of circuit designs for 3DICs.
Figure 6 shows an example of a computing system that supports group-based simulations of hybrid bumps of circuit designs for 3DICs.

### DETAILED DESCRIPTION

Electronic circuits, such as integrated circuits (ICs), are used in nearly every facet of modern society, from automobiles to microwaves to personal computers. The design, verification, and physical manufacture of circuit devices often involve several steps, sometimes referred to as a "design flow." The particular steps of a design flow are dependent upon various factors, such as the type of integrated circuit being designed, its complexity, the design team, and the integrated circuit fabricator (e.g., foundry) that will manufacture the physical circuit. Typically, software and hardware tools can verify the circuit designs at various stages of the design flow, for example through complex rule checks, software-based simulations, hardware-based emulation, and various other techniques supported by modern EDA technology. These steps of a design flow aid in the discovery of errors in circuit designs, and allow design teams and engineers to correct or otherwise improve the designs prior to, during, or after physical manufacture.

Several steps are common to most design flows of IC design. Initially, the specification for a new circuit can be transformed into or otherwise generated as a logical design. Logical designs are sometimes referred to as a register transfer level (RTL) description of a circuit. With logical designs, a circuit can be described in terms of both the exchange of signals between hardware registers and the logical operations that are performed on those signals. The logical design typically employs a Hardware Design Language (HDL), such as the Very high-speed integrated circuit Hardware Design Language (VHDL). The logic of the circuit is then analyzed to confirm that the design will accurately perform the functions desired for the circuit. This analysis is sometimes referred to as "functional verification."

After the accuracy of the logical design is confirmed through functional verification, a logical design can be converted into a device design by synthesis software. The device design, which is typically in the form of a schematic or netlist, can describe the specific electronic devices (e.g., transistors, resistors, and capacitors) that form the circuit design, along with the interconnections between these electronic devices. This device design generally corresponds to the level of representation displayed in conventional circuit diagrams. The relationships between the electronic devices are then analyzed to confirm that the circuit described by the device design will correctly perform the desired functions. This analysis is sometimes referred to as "formal verification." Additionally, preliminary timing estimates for portions of the circuit are often made at this stage, using an assumed characteristic speed for each device, and incorporated into the verification process.

Once the electronic devices components and their interconnections are established, the design can again be transformed in a design flow. In particular, the next transformation may be to a physical design that describes specific geometric elements that form the circuit design. This type of physical version of a circuit design is often referred to as a "layout" design or "physical layout" (and may simply be referred to as a "layout"). The geometric elements, which typically are polygons, define the shapes that will be created in various layers of material to physically manufacture the circuit. Automated place and route tools can be used to define or generate the physical layouts, especially for wires that will be used to interconnect the circuit devices in the physical representation of the circuit design. Each layer of a circuit can have a corresponding layer representation in the layout design, and the geometric shapes described in a layer representation will define the relative locations of the circuit elements that will make up the circuit device (e.g., of transistors, resistors, capacitors, etc.). For example, shapes in the layer representation of a metal layer will define the locations of the metal wires used to connect the circuit devices.

Integrated circuit layout descriptions can be provided in many different formats. The Graphic Data System II (GDSII) format is a popular format for transferring and archiving two-dimensional graphical IC layout data. Among other features, GDSII contains a hierarchy of structures, each structure containing layout elements (e.g., polygons, paths or poly-lines, circles and textboxes). Other layout formats include an open-source format named Open Access, Milkyway by Synopsys, Inc., EDDM by Siemens EDA (formerly Mentor Graphics Corporation), and the Open Artwork System Interchange Standard (OASIS) format proposed by Semiconductor Equipment and Materials International (SEMI). These various industry formats are used to define the geometrical information in IC layout designs that are employed to manufacture integrated circuits. Once the circuit design is finalized, the layout portion of the design can be used by fabrication tools to manufacture the device using a photolithographic process.

Typically, a designer will perform a number of verification processes on the layout design. For example, the layout design may be analyzed to confirm that it accurately represents the circuit devices and their relationships described in the device design. In this process, a layout-versus-schematic (LVS) tool can extract a netlist from the layout design and compare it with the netlist taken from the circuit schematic. LVS can be augmented by formal equivalence checking, which checks whether two circuits perform exactly the same function without demanding isomorphism.

The layout design also may be analyzed to confirm that it complies with various design requirements, such as minimum spacings between geometric elements and minimum linewidths of geometric elements. Such checks may be part of a design rule checking (DRC) process performed on layout design. DRC tools can take, as an input, a physical layout (e.g., in the GDSII or OASIS standard format) as well as a rule deck which specifies the specific rule checks to perform on the layout design. As checks in a DRC process can be specific to a particular circuit fabrication process, rule decks are typically provided by a foundry or circuit manufacturer specifying the particular rules that circuit designs must adhere to for circuit fabrication via the foundry (e.g., at a specified technology node or specific fabrication process parameters). Put another way, foundry-provided rule decks can include a list of rules specific to the semiconductor fabrication process employed by the foundry or otherwise selected for use in circuit manufacture. As such, a set of rules for a particular fabrication process can be referred to as a run-set, rule deck, or just a deck. An example format used for implementation of rule decks is the Standard Verification Rule Format (SVRF) by Siemens EDA (formerly Mentor Graphics Corporation).

There are many different fabrication processes for manufacturing a circuit, but most processes include a series of steps that deposit layers of different materials on a substrate, expose specific portions of each layer to radiation, and then etch the exposed (or non-exposed) portions of the layer away. For example, a simple semiconductor device component could be manufactured by the following steps. First, a positive-type epitaxial layer is grown on a silicon substrate through chemical vapor deposition. Next, a nitride layer is deposited over the epitaxial layer. Then specific areas of the nitride layer are exposed to radiation, and the exposed areas are etched away, leaving behind exposed areas on the epitaxial layer, (i.e., areas no longer covered by the nitride layer). The exposed areas then are subjected to a diffusion or ion implantation process, causing dopants, for example phosphorus, to enter the exposed epitaxial layer and form charged wells. This process of depositing layers of material on the substrate or subsequent material layers, and then exposing specific patterns to radiation, etching, and dopants or other diffusion materials, is repeated a number of times, allowing the different physical layers of the circuit to be manufactured.

Each time that a layer of material is exposed to radiation, a photomask (mask) must be created to expose only the desired areas to the radiation, and to protect the other areas from exposure. The mask is created from circuit layout data. That is, the geometric elements described in a physical layout define the relative locations or areas of the circuit wafer that will be exposed to radiation through the mask. A mask or reticle writing tool is used to create the mask based upon the design layout, after which the mask can be used in a photolithographic process for fabrication of physical circuits. One or more resolution enhancement techniques (RETs) are often employed to improve the resolution of the image that the mask forms on the substrate during the photolithographic process. One of these techniques is optical proximity correction (OPC). OPC can be rule-based, model-based, or both. In rule-based OPC, the proximity effects are characterized, and specific solutions are devised for specific geometric configurations. The layout design is then searched using a DRC tool or a geometric-based software engine to find these geometric configurations. Once they are found, the specific solutions are applied. Through various steps of a design flow, the design, manufacture, and fabrication of circuits can be performed and supported through EDA technology.

While various steps of a design flow are described herein, circuit manufacture processes continue to evolve and may include any additional or alternative flow steps. Moreover, the intricacy of each step in a design flow is immense, especially as circuit designs continue to increase in complexity and the transistors and other devices that form a circuit are merely a few atoms wide. As such, accurate and effective design flow steps may increase the efficiency of circuit design and improvements at any given step in the design flow can yield significant benefits.

With increased circuit design complexity, appropriate analysis and verification of circuit designs may be necessary to ensure that IC reliability, functionality, and performance requirements are satisfied. Parasitic extractions are one form of verification that EDA design flows may employ, which can entail the calculation of parasitic effects in a circuit design. In some implementations, parasitic extractions support the calculation of various parasitic effects on a circuit design, such as parasitic resistances, capacitances, inductances, and the like. The output of such parasitic extraction processes may be a parasitic network, which may be in the form of resistors (an R-network), resistors and capacitors (an RC-network), or any other suitable form. Parasitic networks allow circuit designers to test the behavior of circuit designs and determine when possible issues may arise. Such tests may be in the form of point-to-point resistance simulations, current density experiments through a number of activated sources and sinks, voltage drop measurements (e.g., along branch points and victim devices), electrostatic discharge simulations, and more.

Analysis and simulation through extracted parasitic networks (e.g., R or RC-parasitic networks) has becoming increasingly challenging as the complexity of modern circuit designs continues to explode. Processing scaling, smaller technology nodes, and increased transistor counts have resulted in modern integrated circuits with billions of circuit devices, often times more. The hardware requirements or simulation latencies to test modern circuits (including extracted parasitic networks) has become a bottleneck in EDA design flows. Electrostatic discharge and reliability tests, simulations, or verifications can require simulation of chip-wide power or ground networks, which can require massive amounts of parasitic network data to be processed. Parasitic network (e.g., netlist) extractions for power and ground nets of a full-chip design may require immense amounts of hardware resources, and testing and simulations based on such networks may likewise require immense computational resources and time.

With advances in EDA technology, increasing chip complexities and new chip structures can significantly increase the computational requirements for circuit analyses and simulations. As one example, 3-dimensional integrated circuit (3DIC) structures can be achieved by stacking multiple chips on top of one another. 3DICs can be constructed by vertically stacking multiple chips or wafters together into a single package, and electrical interconnections and signal exchanges between the different chips within the 3DIC can be achieved in various ways, including through bump and bonding technologies. A hybrid bump (also referred to as a micro-bump or simply a bump) may refer to any connection structure or element used to support the connection of two different circuits, e.g., as part of a 3DIC package. The physical form of a hybrid bump may be as copper microbumps or as copper pads for hybrid bonding connection techniques and hybrid bumps may be used to interconnect stacked circuits in 3DIC structures.

As an illustrative structure, a 3DIC package may include an interposer upon which multiple systems on a chip (SoCs) may be vertically stacked onto the interposer or other SoCs. The stacked SoCs and interposer circuits may be connected through hybrid bumps that are constructed on faces of the interposer and the SoCs. The hybrid bumps may align together when the circuits are vertically stacked, allowing for electrical interconnections between the stacked circuits. Hybrid bonding or other circuit attachment processes may be employed to physically attach the circuits. Note that, as used herein, a hybrid bump may refer to any individual connection element (e.g., electrical interconnection point) of a circuit, and need not be a physical bump that extrudes from a wafer or circuit. For example, copper pillars or copper pads in hybrid bonding-based circuit interconnection structures may have smooth circuit surfaces, but each of the copper interconnections of such circuit structures may be referred as a hybrid bump as each is used to interconnect circuits in a 3DIC package. With increasing design complexities, the number of hybrid bumps used in circuits of 3DIC packages is rapidly increasing. A single SoC in a 3DIC package may include millions to tens of millions of hybrid bumps, with such hybrid bump numbers continuing to increase as modern circuit technologies evolve.

The spike in hybrid bump counts for circuits designed for 3DIC packages can result in significant computational increases in circuit verifications and analyses. For example, electrostatic discharge (ESD) and other circuit verification processes may require simulations for each hybrid bump in a circuit design (SoCs, interposers, etc.). For example, point-to-point resistance measurements may be performed between the various EDS circuit structures (e.g., clamps) in a circuit design and each individual hybrid bump in the circuit design. Such ESD verifications for hybrid bumps can result in tens of millions of additional simulations performed for circuit designs for 3DIC packages, which can be time-consuming, computationally expensive, and near impractical without costly high-performance computing systems.

The disclosure herein may provide systems, methods, devices, and logic for group-based simulations of hybrid bumps of circuit designs for 3DICs. The various technical features described herein may be collectively referred to as hybrid bump grouping technology, which may include various hybrid bump identification, grouping, and simulation features. For example, the hybrid bump grouping technology of the present disclosure may support intelligent identification of hybrid bumps in an input circuit design and automatic insertion of probes to represent identified hybrid bumps for representative simulations or other circuit analyses. Compared to conventional schemes which may require individual probe specification for individual hybrid bumps in designs and simulation control files, the hybrid bump grouping technology described herein may provide a layer-based detection scheme to intelligently detect hybrid bumps located in a given circuit layer through text and shape detections in the given circuit layer. Probes may be automatically generated and export operations to text generated probes may be automatically performed on a layer-basis instead for individual hybrid bumps. Such hybrid bump detection techniques may improve run-time efficiency, decrease computational latencies for parasitic extraction processes, and reduce manual processes and human error in hybrid bump simulations for circuit designs.

As another technical benefit of the hybrid bump grouping technology described herein, hybrid bumps may be grouped together and representative simulations performed for bump groups. Instead of performing costly simulations for every single hybrid bump of a circuit design, the hybrid bump grouping and representative simulation features described herein can reduce the number of simulations performed (e.g., by up to 50%, 75%, 88%, or more), thus reducing turnaround time for circuit verifications. Intelligent grouping techniques can be employed to efficiently group hybrid bumps, including tiling techniques with tile dimensions determined as a function of the pitch value/distance between hybrid bumps in the circuit design. Moreover, the hybrid bump grouping technology of the present disclosure may differentiate between differing bump topologies, including regular bump topologies in which hybrid bumps are separated by constant pitch values and irregular bump topologies in which hybrid bumps having varying pitch values. Differentiated grouping techniques for different bump topologies may increase the flexibility and applicability of the hybrid bump grouping technology features described herein.

These and other technical features and technical benefits of the hybrid bump grouping technology are presented herein.

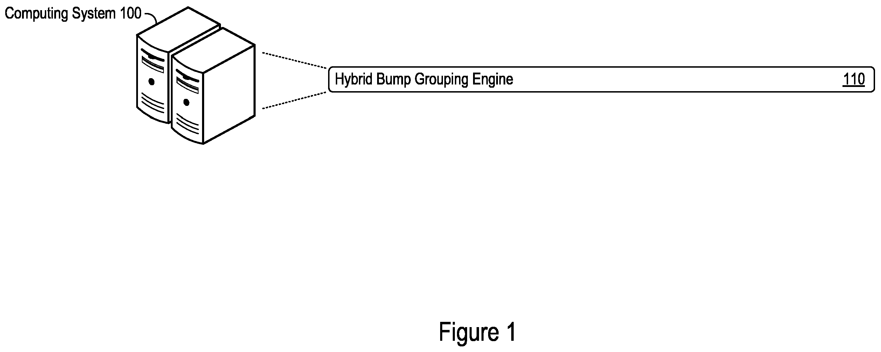

Figure 1 shows an example of a computing system that supports group-based simulations of hybrid bumps of circuit designs for 3DICs. The computing system 100 may take the form of a single or multiple computing devices such as application servers, compute nodes, desktop or laptop computers, smart phones or other mobile devices, tablet devices, embedded controllers, and more. In some implementations, the computing system 100 hosts, instantiates, executes, supports, or implements an EDA application or EDA system that supports circuit design and analysis, and may accordingly provide or implement any of the hybrid bump grouping technology described herein.

As an example implementation to support any combination of the hybrid bump grouping technology described herein, the computing system 100 shown in Figure 1 includes a bump grouping engine 110. The computing system 100 may implement the bump grouping engine 110 (including components thereof) in various ways, for example as hardware and programming. The programming for the bump grouping engine 110 may take the form of processor-executable instructions stored on a non-transitory machine-readable storage medium and the hardware for the bump grouping engine 110 may include a processor to execute those instructions. A processor may take the form of single processor or multi-processor systems, and in some examples, the computing system 100 implements multiple engines using the same computing system features or hardware components (e.g., a common processor or a common storage medium).

In operation, the bump grouping engine 110 may identify hybrid bumps for an input circuit design, and each hybrid pump may represent a connection element between circuits of a 3DIC structure. In operation, the bump grouping engine 110 may also group the hybrid bumps into bump groups based on a pitch value that specifies a distance between the hybrid bumps from one another. Each bump group may include multiple hybrid bumps. For a given bump group of the bump groups, the bump grouping engine 110 may perform a point-to-point simulation from a representative point determined for the given bump group and use a result of the point-to-point simulation from the representative point as a simulation result for each of the multiple hybrid bumps included in the given bump group.

These and other technical features and technical benefits of the hybrid bump grouping technology are described in greater detail next.

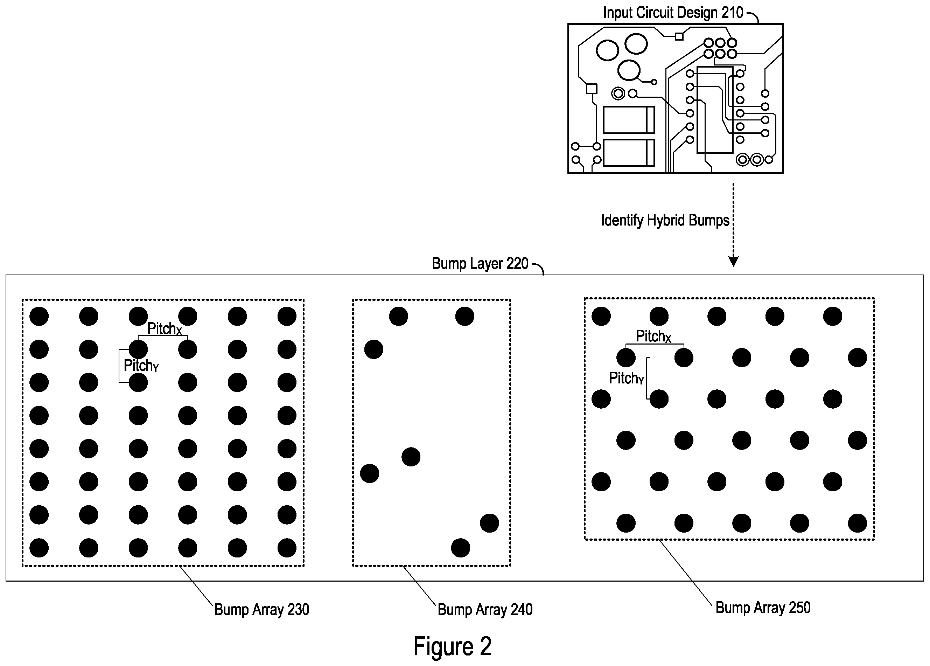

Figure 2 shows an example identification of hybrid bumps for an input circuit design according to the present disclosure. In the example of Figure 2, an input circuit design 210 is shown. The input circuit design 210 may be any digital representation of a circuit, including in any suitable circuit design format. The input circuit design 210 may represent a circuit (e.g., wafer) for a 3DIC structure, and a 3DIC structure may be any suitable 3DIC package or design in which multiple circuits (e.g., wafers) are stacked together. In some examples, the bump grouping engine 110 may access input circuit designs in the form of physical layouts of individual circuits of a 3DIC structure, for example input physical layouts provided as part of parasitic extraction or circuit verification steps in an EDA design flow. Thus, the input circuit design 210 may be for a SoC, interposer, or other circuit of a 3DIC structure. As the input circuit design 210 may be designed for inclusion in a 3DIC structure, the input circuit design 210 may include hybrid bumps to support interconnecting the circuit represented by the input circuit design 210 with other circuit so the 3DIC structure.

Parasitic extractions, RC simulations, and other forms of circuit verifications are often controlled by a control file in which simulation parameters can be specified. Conventional processes may require individually specifying a separate measurement for each individual hybrid bump in the input circuit design 210. For point-to-point or other ESD simulations, a resistance measurement or other simulated verification may be performed for each individual hybrid bump in the input circuit design 210, which could number in the millions and more. Conventional processes may require insertion each individual hybrid bump (e.g., as represented by a probe) into a circuit design and exporting individual measurement operations for each hybrid bump (e.g., via its corresponding probe) into the control file. Such individual export operations may be required for each clamp or other ESD structure simulated for a given verification step. Such conventional techniques may require millions of executions of pin-pair export operations on a one-by-one basis for each individual hybrid bump.

In contrast, the bump grouping engine 110 may support a layer-based, automatic identification of hybrid bumps such that an exporting of pin-pair operation is executed once for a given circuit layer. The bump grouping engine 110 may identify a bump layer of the input circuit design 210 in which hybrid bumps of the input circuit design are positioned at or otherwise located within. As the hybrid bumps may represent interconnection elements for the input circuit design 210 with a different circuit of a 3DIC structure, hybrid bumps of the input circuit design 210 may be co-planar or located within the same layer of the input circuit design 210. That is, a bump layer may be a circuit design layer specific to 3DIC interconnections, which may physically interface, touch, or overlap with the bump layer of a different circuit in the 3DIC structure. Thus, the bump grouping engine 110 may identify a bump layer of the input circuit design 210 as a top-most (or bottom-most) physical layer of the input circuit design 210. Additionally or alternatively, the input circuit design 210 may itself specify the bump layer in which hybrid bumps are located (e.g., as metadata, as a layer parameter value, or in any other suitable way).

The bump grouping engine 110 may identify hybrid bumps in a bump layer of the input circuit design 210 based on text locations in the bump layer. In digital circuit designs, circuit elements (including hybrid bumps) may have associated text, which may specify any relevant data for the circuit elements, such as element names, properties, etc. In the input circuit design 210, each hybrid bump of the input circuit design 210 may have text assigned to it, and such assigned text may be located in the bump layer. Accordingly, the bump grouping engine 110 may detect locations of text in a bump layer (e.g., a circuit design layer specific to 3DIC interconnections). Then, the bump grouping engine 110 may detect bump shapes next to the locations of the text or to which the detected text is associated with, e.g., a circular shape or any other suitable shape that hybrid bumps are designed for. Identification of such bump shapes based on detected text may be an elegant and efficient hybrid bump detection mechanism, allowing the bump grouping engine 110 to efficiently scan a bump layer to detect the hybrid bumps included therein. Then, the bump grouping engine 110 may insert a pin location in each of the bump shapes to represent the hybrid bumps of the input circuit design 210. For example, the bump grouping engine 110 may create an anchor at the center of a bump shape proximate to detected text, and use the anchor layer to generate a probe on each hybrid bump in the input circuit design 210.

Probes generated for hybrid bumps of the input circuit design 210 may, in effect, represent the hybrid bumps of the input circuit design 210. As probes can be used for parasitic extractions, point-to-point simulations, ESD verifications, or other analyses and verification in the EDA design flow, a given probe placed at a hybrid bump location may represent a given hybrid bump in the input circuit design 210. As used herein, the various technical features performed for hybrid bumps, including bump identification, bump grouping, and bump simulation, may be performed through probes that represent hybrid bumps in a circuit design. Thus, generation or insertion of a probe to represent a given hybrid bump in the input circuit design 210 may be a form of hybrid bump identification supported by the hybrid bump grouping technology described herein. In a similar manner, grouping of hybrid bumps may be performed based on grouping of probes that represent the hybrid bumps. Any feature described herein for hybrid bumps may be consistently implemented through or otherwise applicable to probes that represent the hybrid bumps, and vice versa.

The bump grouping engine 110 may parse through a bump layer to detect any hybrid bumps in the bump layer. Probes generated for the detected hybrid bumps (e.g., at a center location of the hybrid bump) may be added to other probes specified for a parasitic extraction run, for example other simulation parameters or circuit locations to test for an extracted parasitic network. Instead of execution of export operations for individually-specified probes for hybrid bumps in the input circuit design 210, the bump grouping engine 110 may instead automatically detect hybrid bumps based on text locations and bump shapes, and an export operation can be performed for all probes on a single layer (e.g., a bump layer or corresponding anchor layer). A single export instruction for a single layer supported by the bump grouping engine 110 may provide improved efficiency and reduce runtime and manual effort as compared to individual export operations for individual or manually-generated probes for hybrid bumps of an input circuit design 210.

In the example of Figure 2, the bump grouping engine 110 identifies (e.g., detects) hybrid bumps in a bump layer 220 of an input circuit design 210. Each black circle in the bump layer 220 of Figure 2 may represent a different hybrid bump (or a different probe thereof). Note that the bump grouping engine 110 may separate hybrid bumps (or corresponding probes) based on the nets of the circuit design. In some implementations, the bump grouping engine 110 may separate detected hybrid bumps based one nets prior to probe generation, and net information or relevant net data may be associated with the generated probes. Groupings of hybrid bumps may be net-specific, and thus hybrid bumps that are part of or included in two different nets may be grouped separately. Representative simulations may be performed on a net-specific basis, and representative simulations results reused for hybrid bumps of the same net (but, in some cases, not for reused for hybrid bumps of different nets). Accordingly, the bump grouping engine 110 may separate hybrid bumps identified for an input circuit design based a net that each of the hybrid bumps are part of and group the hybrid bumps into the bump groups further based on the net that each of the hybrid bumps are part of.

To determine bump groups for hybrid bumps of an input circuit design, the bump grouping engine 110 may separate the hybrid bumps into different bump arrays. A bump array may be a grouping of hybrid bumps, though the bump grouping engine 110 may further group the hybrid bumps included in each bump array for group-based simulations, as described further herein. The bump grouping engine 110 may separate hybrid bumps into bump arrays based on pitch size. As used herein, pitch size may refer to a distance between circuit elements. As such, the pitch size for a hybrid bump may refer to a distance between the hybrid bump and a neighboring hybrid bump (e.g., a closest hybrid bump along a directional axis). For an X-Y coordinate system, pitch values along an X-axis may be referred to as pitch_{X} and pitch values along a Y-axis may be referred to as pitchy. Pitch values may be specified as a parameter or feature of hybrid bumps, e.g., during design phases. Thus, the bump grouping engine 110 may determine pitch values for individual hybrid bumps based on the specified pitch values or by accessing relevant parameter data for the hybrid bumps. Additionally or alternatively, the bump grouping engine 110 may itself measure or determine pitch values for the hybrid bumps of a bump layer.

As noted herein, the bump grouping engine 110 may separate hybrid bumps into bump arrays based on pitch values. In particular, a bump array may be comprised of hybrid bumps with the same pitch value (e.g., same pitch_{X} and pitchy or with pitch values that vary within a tolerance range). As used herein, the term "same pitch values" for bump array determinations may mean or include hybrid bumps with pitch values within a tolerance range. Example tolerance ranges may include within a threshold percentage value from one another (e.g., within 1%) or within a fixed range of pitch values. The bump grouping engine 110 may parse through hybrid bumps of a bump layer and separate any hybrid bumps with the same pitch value(s) (e.g., within a tolerance range) into the same bump array. In the example of Figure 2, the bump grouping engine 110 determines that a set of hybrid bumps have the same pitch values (e.g., same pitch_{X} and pitchy) and separates the hybrid bumps into a bump array shown as the bump array 230 in Figure 2. As the hybrid bumps in the bump array 230 are arranged in a grid manner, the pitch_{X} of each hybrid bump specifies a distance to a next hybrid bump in the X-axis direction and the pitchy of each hybrid bump specifies a distance to a next hybrid bump in the Y-axis direction.

As another example from Figure 2, the bump grouping engine 110 may determine another set of hybrid bumps with the same pitch values (e.g., same pitch_{X} and pitchy) and separates this other set of hybrid bumps into a bump array shown as the bump array 250 in Figure 2. In the bump array 250 of Figure 2, the hybrid bumps are arranged in an offset grid manner, with every other row of hybrid bumps offset from the previous row by a fixed distance in the X-direction. The pitch values for this offset grid pattern may be specified in different ways (e.g., measured as a distance to a next hybrid bump in the X-axis direction and measured as a Y-distance to the hybrid bump row below or above as shown in Figure 2). As the hybrid bumps of the bump array 250 are spaced regularly in the X and Y-axis directions, the pitch values for each hybrid bump in the bump array 250 may be the same for this set of hybrid bumps.

Note that the bump arrays 230 and 250 determined by the bump grouping engine 110 to each include hybrid bumps that are in the same general location of the bump layer 220. That is, the hybrid bumps of the bump array 230 are each located next to one another with no other hybrid bumps with different pitch values located within a region that the bump array 230 covers. The same is true for the bump array 250 as well. With bump layers of circuit designs including millions of hybrid bumps and more, it is possible that other regions of the bump layer 220 may include hybrid bumps with the same pitch value as those of the bump array 230 or as those of the bump array 250. In some implementations, for hybrid bumps at a different location, the bump grouping engine 110 may separate these hybrid bumps at the different location into a different bump array from the bump array 230, even though the hybrid bumps of the different bump array and the bump array 230 may have the same pitch values. Differentiating such bump arrays with hybrid bumps with the same pitch value may aid in the later grouping of the hybrid bumps for representative simulations. Alternatively, the bump grouping engine 110 may separate the hybrid bumps at different locations and with the same pitch values into the same bump array.

In any manner described herein, the bump grouping engine 110 may separate hybrid bumps with the same pitch value into bump arrays. A bump array comprised of hybrid bumps with the same pitch value may be regularly spaced, e.g., in a grid or offset grid pattern. Such bump arrays may be referred to as having a regular topology since the hybrid bumps of such bump arrays are regularly spaced from one another. In the example of Figure 2, the bump array 230 and the bump array 250 may be determined by the bump grouping engine 110 to have a regular topology. The bump grouping engine 110 may determine that some hybrid bumps in a bump layer are of an irregular topology (e.g., irregularly spaced or positioned within the bump layer). The bump grouping engine 110 may determine that any hybrid bumps not grouped into a bump array with a regular topology (e.g., based on having the same pitch values) as part of an irregular topology and the bump grouping engine 110 may separate any such hybrid bumps into bump arrays of irregular topology.

An example of a bump array with an irregular topology is shown in Figure 2 through the bump array 240. The bump grouping engine 110 may separate the hybrid bumps into the bump array 240 based on the determination of the bump arrays 230 and 250 that surround the bump array 240. In scanning the hybrid bumps of the bump layer 220, the bump grouping engine 110 may determine that hybrid bumps located between the hybrid bumps of the bump array 230 and bump array 250 are irregularly spaced (e.g., having varying pitch values) and separate such hybrid bumps into the bump array 240. In some examples, the bump grouping engine 110 may initially determine or separate hybrid bumps of a regular topology into bump arrays. The remaining hybrid bumps of a bump layer not separated into bump arrays of a regular topology may then be separated into bump arrays, each of such bump arrays of irregular topology.

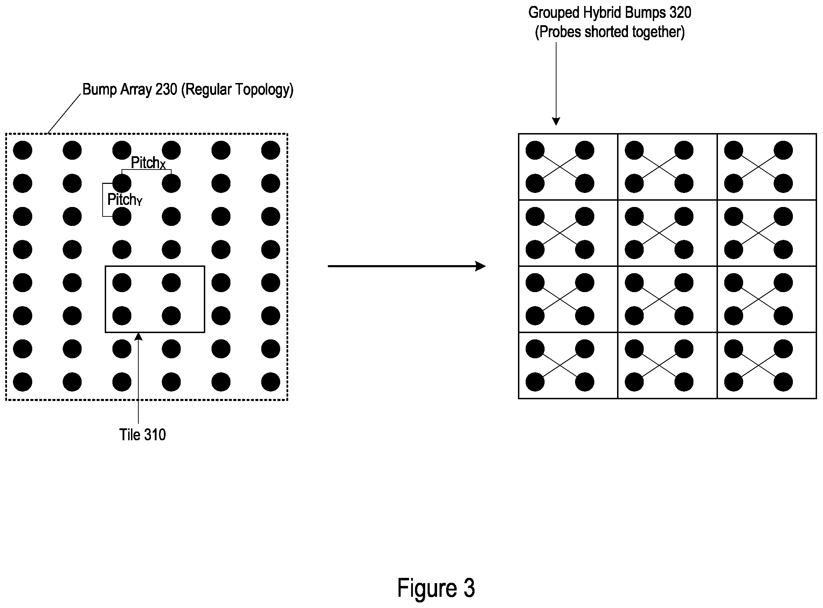

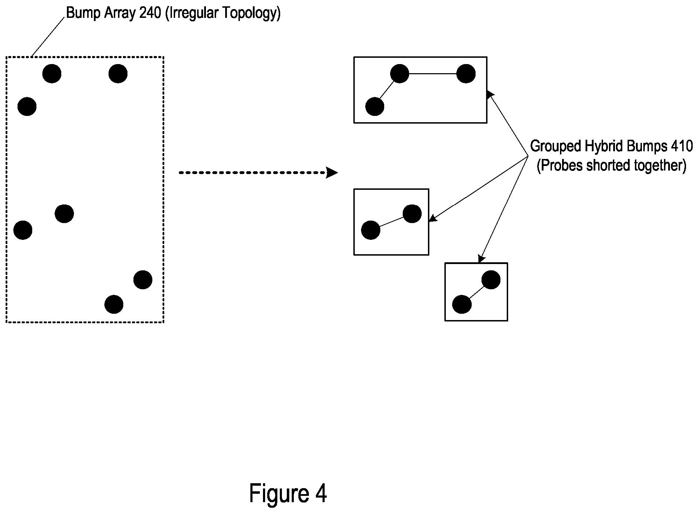

By separating hybrid bumps of a bump layer into bump arrays, the bump grouping engine 110 may ensure that hybrid bumps of a given bump array share a common topology type (e.g., regular or irregular). The bump grouping engine 110 may apply a topology-specific grouping technique for bump arrays, including grouping techniques specific to regular topologies and grouping techniques specific to irregular topologies. Example features of topology-specific grouping techniques are described next with reference to Figures 3 and 4.

Figure 3 shows an example of hybrid bump grouping for a bump array with a regular topology according to the present disclosure. In the example of Figure 3, the bump grouping engine 110 may perform a hybrid bump grouping on the bump array 230 of Figure 2, which the bump grouping engine 110 may separate out as a bump array with a regular topology. This may be the case as the hybrid bumps of the bump array 230 may have the same pitch value (e.g. within a tolerance range). Thus, hybrid bumps with a regular topology may be regularly spaced from one another based on pitch value. The bump grouping engine 110 may group the hybrid bumps of the bump array 230 into the bump groups based on pitch value.

To do so, the bump grouping engine may partition a region that encompasses the hybrid bumps into tiles with a dimension size that is a function of the pitch value. The region partitioned by the bump grouping engine 110 may be set by a bounding box. the bump grouping engine 110 may generate, obtain, or set a bounding box that surrounds the hybrid bumps of the bump array 230, and the bounding box may take the form of any perimeter that encloses the hybrid bumps of the bump array 230. The bump grouping engine 110 may partition the bounding box into tiles, and each tile may represent a different bump group. The hybrid bumps included in each tile may be grouped by the bump grouping engine 110 into the same bump group. Figure 3 shows an example of a tile 310 that the bump grouping engine 110 may partition, and the four hybrid bumps within the tile 310 may be placed in the same bump group.

The bump grouping engine 110 may partition a bounding box of the bump array 230 into tiles based on a pitch value of the hybrid bumps in the bump array. In some implementations, the bump grouping engine 110 may set tiling dimensions as a function of the pitch values of the hybrid bumps of a regular topology. As one example, the bump grouping engine 110 may set the dimension size of tiles as a multiple of a pitch value. In this example, the bump grouping engine 110 may set a width of partitioned tiles to be N * pitch_{X}, where N is a configurable integer value that serves as the multiplier for the pitch_{X} value of the hybrid bumps of a bump array. Thus, for N = 2, the horizontal width of tiles in the partitioned bounding box may be twice the horizontal pitch value of the hybrid bumps. As another example, the bump grouping engine 110 may set a height of partitioned tiles to be M * pitchy, where M is a configurable integer value that can control the vertical height of partitioned tiles. In some cases, the bump grouping engine 110 may set the M and N integer values to be equal to one another.

As the pitch value may define the spacing of hybrid bumps in a regular topology, the tile dimensions set by the bump grouping engine 110 may control a number of hybrid bumps included in each tile (and thus each bump group). As an illustrative example in Figure 3, the bump grouping engine 110 may set tile dimensions to be twice the pitch values of the regular topology (e.g., M = N = 2). Thus, each tile of the partitioned bounding box may include four (4) hybrid bumps, for example as shown in tile 310 and the grouped hybrid bumps 320 of the partitioned region surrounding the bump array 230. Various configurations are possible and supported herein. Configurable multiples of tile dimensions may allow the bump grouping engine 110 to flexibly trade-off between increased computational efficiency and increased accuracy, depending on circuit verification and simulation needs. The greater the integer multiple for tile dimensions, the greater the number of hybrid bumps included in a single bump group. Thus, the greater the reduction in computational requirements as a representative simulation performed for a given bump group can be used as a simulation result for a potentially greater number of hybrid bumps. The lesser the integer multiple for tile dimensions, the greater the accuracy of the representative simulation, as the grouped hybrid bumps will be (necessarily) closer in location and the representative simulation may more accurately represent the grouped hybrid bumps.

In the example of Figure 3, the bump grouping engine 110 groups the hybrid bumps of the bump array 230 into bump groups with a bump size of four (4). The grouped hybrid bumps 320 shown in Figure 3 include twelve (12) tiles, and thus twelve (12) bump groups, each comprising four hybrid bumps of the bump array 230. For a given bump group, the bump grouping engine 110 may perform a representative simulation and use a result of the representative simulation a simulation result for some or all of the hybrid bumps included in the given bump group. In some examples, the bump grouping engine 110 may select a representative point for the bump group and perform a point-to-point simulation from the representative point (e.g., between the representative point and any number of clamps in the circuit design for ESD testing and verifications).

The bump grouping engine 110 may determine a representative point for a bump group in any number of ways. In some implementations, the bump grouping engine 110 may short the multiple hybrid bumps included in a given bump group and determine the representative point from within one of the multiple hybrid bumps included in the given bump group. Shorting together the hybrid bumps of bump group may be achieved by any suitable modification to the circuit design, the simulation tests, or combinations thereof and in any suitable manner, e.g., by electrically connecting the probes of the hybrid bumps together. By shorting the probes together, using any of the probes of a bump group as the representative point for the simulation may provide the same result. Thus, the bump grouping engine 110 may use any suitable selection mechanism to pick one of the probes of the give bump group as the representative point.

In some implementations, for a given bump group, the bump grouping engine 110 may randomly select a hybrid bump among the multiple hybrid bumps included in the given bump group and determine the representative point from within the randomly selected hybrid bump (e.g., as the probe for the randomly selected hybrid bump). In some implementations, the bump grouping engine 110 may select the representative point as a function of the locations of the hybrid bumps in the given bump group. Example functions may include an average of the hybrid bump locations (e.g., average X-values together and average Y-values together to determine the representative point). As yet another example, the bump grouping engine 110 may select a fixed point relative to a tile as the representative point, e.g., a tile center point, a specific corner of the tile, etc. While some examples are presented herein, the bump grouping engine 110 may use any suitable technique, method, or technique to select a representative point to perform a simulation for a given bump group.

Through performing of a representative simulation for a given bump group and applying the simulation result for each of the hybrid bumps of the given bump group, the bump grouping engine 110 may reduce computational latency and improve performance times for circuit verification processes. For bump groups comprised of four (4) hybrid bumps, the representative simulation may reduce computational latency by up to 75% if only one simulation is performed instead of four (e.g., if each of the hybrid bumps in the bump group are part of the same net). For bump groups comprised of nine (9) hybrid bumps, the representative simulation may reduce computational latency by up to 88.8% if only one simulation is performed instead of nine. The hybrid bump grouping technology of the present disclosure may thus improve EDA computing systems by improving verification run-times and reducing the amount of simulations performed for the testing and verification of hybrid bumps for 3DIC structures.

Figure 4 shows an example of hybrid bump grouping for a bump array with an irregular topology according to the present disclosure. In the example of Figure 4, the bump grouping engine 110 may perform a hybrid bump grouping on the bump array 240 of Figure 2, which the bump grouping engine 110 may separate out as a bump array with an irregular topology. This may be the case as the hybrid bumps of the bump array 240 may have differing pitch values. Thus, hybrid bumps with an irregular topology may be irregularly spaced from one another.

To group hybrid bumps of an irregular topology, the bump grouping engine 110 may employ any number of techniques. As one technique, the bump grouping engine 110 may process the bump array 240 and group together hybrid bumps that are within threshold distance from one another. Such a threshold distance may be measured as absolute distance or as dimension-based distance, e.g., within a horizontal distance specified as a threshold pitch_{X}. The bump grouping engine 110 may perform such threshold distance measures on per-hybrid bump basis. For an initially-selected hybrid bump of an irregular topology, the bump grouping engine 110 may identify any other hybrid bumps within the threshold distance, and then continue the threshold distance determinations for the identified hybrid bumps, continuing as such until no additional hybrid bumps are within the threshold distance, thus forming a first bump group in the irregular topology. Then bump grouping engine 110 may then select another hybrid bump in the irregular topology that is not grouped and perform another threshold distance-based grouping. Such a process may continue until each of the hybrid bumps in a bump array of an irregular topology are grouped.

In the example of Figure 4, the bump grouping engine 110 groups the hybrid bumps of the bump array 240 into three (3) different bump groups, shown in Figure 3 through the grouped hybrid bumps 410. For each of the bump groups determined for the bump array, the bump grouping engine 110 may perform a representative simulation and use the simulation results for each of the hybrid bumps part of a given bump group. Representative simulations, determination of a representative point, and the like may be performed for the grouped hybrid bumps 410 in any manner as described herein. As hybrid bumps grouped for an irregular topology may not include partitioned tiles as with a regular topology, the bump grouping engine 110 may utilize a bounding box that surrounds such bump group instead of a tile, thus supporting tile-based representative point determinations through the bounding box instead for bump groups determined for irregular topologies.

Through any combination of the features herein, the hybrid bump grouping technology of the present disclosure may provide technical improvements to EDA computing systems and processes. Automatic detection and operation exports for hybrid bumps in circuit designs can reduce the manual effort and latency of generating control files for simulation tests. Grouping of hybrid bumps may allow for the re-use of representative simulation results for multiple hybrid bumps in the same bump group, which can definitively reduce the number of simulations performed for ESD and other verification processes. Topology-specific grouping techniques may allow the hybrid bump grouping technology described herein to efficiently generate bump groups for circuit regions with regular bump topologies as well as flexibly adapt to circuit regions with irregular bump topologies. Through the various hybrid bump grouping features described herein, computational latencies can be reduced, EDA systems can operate more efficiently, and the run-time costly simulation performances can be improved.

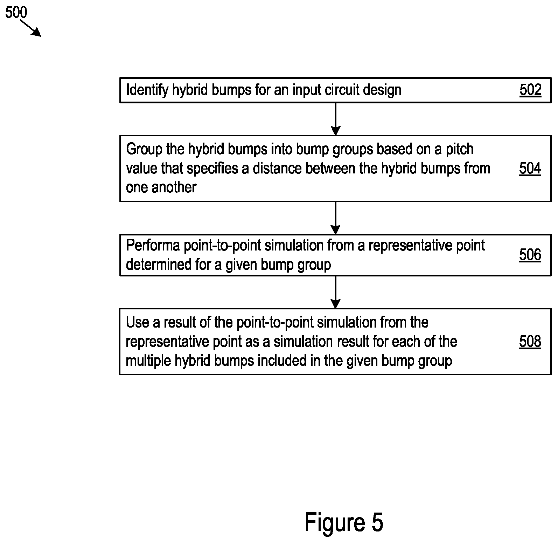

Figure 5 shows an example of logic 500 that a system may implement to support group-based simulations of hybrid bumps of circuit designs for 3DICs. For example, the computing system 100 may implement the logic 500 as hardware, executable instructions stored on a machine-readable medium, or as a combination of both. The computing system 100 may implement the logic 500 via the bump grouping engine 110, through which the computing system 100 may perform or execute the logic 500 as a method to support group-based simulations of hybrid bumps of circuit designs for 3DICs. The following description of the logic 500 is provided using the bump grouping engine 110 as an example implementation. However, other implementation options by computing systems are possible.

In implementing the logic 500, the bump grouping engine 110 may identify hybrid bumps for an input circuit design (502), and each hybrid pump may represent a connection element between circuits of a 3DIC structure. In implementing the logic 500, the bump grouping engine 110 may also group the hybrid bumps into bump groups based on a pitch value that specifies a distance between the hybrid bumps from one another (504). Each bump group may include multiple hybrid bumps. For a given bump group of the bump groups, the bump grouping engine 110 may perform a point-to-point simulation from a representative point determined for the given bump group (506) and use a result of the point-to-point simulation from the representative point as a simulation result for each of the multiple hybrid bumps included in the given bump group (508).

The logic 500 shown in Figure 5 provides an illustrative example by which a computing system 100 may support or implement various features of the hybrid bump grouping technology described herein. Additional or alternative steps in the logic 500 are contemplated herein, including according to any of the various features described herein for the bump grouping engine 110.

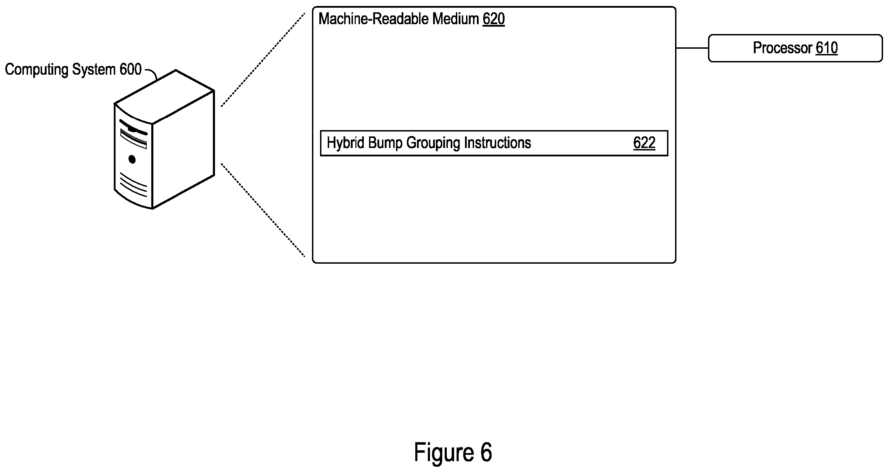

Figure 6 shows an example of a computing system 600 that supports group-based simulations of hybrid bumps of circuit designs for 3DICs. The computing system 600 may include a processor 610, which may take the form of a single or multiple processors. The processor(s) 610 may include a central processing unit (CPU), microprocessor, or any hardware device suitable for executing instructions stored on a machine-readable medium. The computing system 600 may include a machine-readable medium 620. The machine-readable medium 620 may take the form of any non-transitory electronic, magnetic, optical, or other physical storage device that stores executable instructions, such as the hybrid bump grouping instructions 622 shown in Figure 6. As such, the machine-readable medium 620 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 600 may execute instructions stored on the machine-readable medium 620 through the processor 610. Executing the instructions (e.g., the hybrid bump grouping instructions 622) may cause the computing system 600 to perform or implement any of the hybrid bump grouping technology described herein, including according to any aspect of the bump grouping engine 110.

For example, execution of the hybrid bump grouping instructions 622 by the processor 610 may cause the computing system 600 to identify hybrid bumps for an input circuit design, and each hybrid pump may represent a connection element between circuits of a 3DIC structure. Execution of the hybrid bump grouping instructions 622 by the processor 610 may also cause the computing system 600 to group the hybrid bumps into bump groups based on a pitch value that specifies a distance between the hybrid bumps from one another. Each bump group may include multiple hybrid bumps. For a given bump group of the bump groups, execution of the hybrid bump grouping instructions 622 by the processor 610 may cause the computing system 600 to perform a point-to-point simulation from a representative point determined for the given bump group and use a result of the point-to-point simulation from the representative point as a simulation result for each of the multiple hybrid bumps included in the given bump group.

Any combination of the hybrid bump grouping technology as described herein may be implemented via the hybrid bump grouping instructions 622.

The systems, methods, devices, and logic described above, including the bump grouping engine 110, may be implemented in many different ways in many different combinations of hardware, logic, circuitry, and executable instructions stored on a machine-readable medium. For example, the bump grouping engine 110, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the bump grouping engine 110.

The processing capability of the systems, devices, and engines described herein, including the bump grouping engine 110, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples and features have been described above, many more implementations are possible.

## Claims

1. A method comprising:
by a computing system:
identifying hybrid bumps for an input circuit design, wherein each hybrid pump represents a connection element between circuits of a 3-dimensional integrated circuit (3DIC) structure;
grouping the hybrid bumps into bump groups based on a pitch value that specifies a distance between the hybrid bumps from one another, wherein each bump group comprises multiple hybrid bumps;
for a given bump group of the bump groups:
performing a point-to-point simulation from a representative point determined for the given bump group; and
using a result of the point-to-point simulation from the representative point as a simulation result for each of the multiple hybrid bumps included in the given bump group.

2. The method of claim 1, wherein identifying the hybrid bumps for the input circuit design comprises:
detecting locations of text in a circuit design layer specific to 3DIC interconnections;
detecting bump shapes next to the locations of the text; and
inserting a pin location in each of the bump shapes to represent the hybrid bumps of the input circuit design.

3. The method of claim 1, wherein grouping the hybrid bumps into the bump groups based on the pitch value comprises partitioning a region that encompasses the hybrid bumps into tiles with a dimension size that is a function of the pitch value.

4. The method of claim 3, wherein the dimension size of the tiles is a multiple of the pitch value.

5. The method of claim 1, comprising:
separating the hybrid bumps based a net that each of the hybrid bumps are part of; and
grouping the hybrid bumps into the bump groups further based on the net that each of the hybrid bumps are part of.

6. The method of claim 1, further comprising, for the given bump group:
shorting the multiple hybrid bumps included in the given bump group; and
determining the representative point from within one of the multiple hybrid bumps included in the given bump group.

7. The method of claim 1, further comprising, for the given bump group:
randomly selecting a hybrid bump among the multiple hybrid bumps included in the given bump group; and
determining the representative point from within the randomly selected hybrid bump.

8. A system comprising:
a processor; and
a non-transitory machine-readable medium comprising instructions that, when executed by a processor, cause a computing system to:
identify hybrid bumps for an input circuit design, wherein each hybrid pump represents a connection element between circuits of a 3-dimensional integrated circuit (3DIC) structure;
group the hybrid bumps into bump groups based on a pitch value that specifies a distance between the hybrid bumps from one another, wherein each bump group comprises multiple hybrid bumps;
for a given bump group of the bump groups:
perform a point-to-point simulation from a representative point determined for the given bump group; and
use a result of the point-to-point simulation from the representative point as a simulation result for each of the multiple hybrid bumps included in the given bump group.

9. The system of claim 8, wherein the instructions, when executed, cause the computing system to identify the hybrid bumps for the input circuit design by:
detecting locations of text in a circuit design layer specific to 3DIC interconnections;
detecting bump shapes next to the locations of the text; and
inserting a pin location in each of the bump shapes to represent the hybrid bumps of the input circuit design.

10. The system of claim 8, wherein the instructions, when executed, cause the computing system to group the hybrid bumps into the bump groups based on the pitch value by partitioning a region that encompasses the hybrid bumps into tiles with a dimension size that is a function of the pitch value.

11. The system of claim 10, wherein the dimension size of the tiles is a multiple of the pitch value.

12. The system of claim 8, wherein the instructions, when executed, cause the computing system to:
separate the hybrid bumps based a net that each of the hybrid bumps are part of and
group the hybrid bumps into the bump groups further based on the net that each of the hybrid bumps are part of.

13. The system of claim 8, wherein the instructions, when executed, further cause the computing system to, for the given bump group:
short the multiple hybrid bumps included in the given bump group; and
determine the representative point from within one of the multiple hybrid bumps included in the given bump group.

14. The system of claim 8, wherein the instructions, when executed, further cause the computing system to, for the given bump group:
randomly select a hybrid bump among the multiple hybrid bumps included in the given bump group; and
determine the representative point from within the randomly selected hybrid bump.

15. A non-transitory machine-readable medium comprising instructions that, when executed by a processor, cause a computing system to perform a method according to any of claims 1-7.
